# EUROPÄISCHE PATENTSCHRIFT

(11) **EP 3 044 473 B1**
(45) Veröffentlichungstag und Bekanntmachung des Hinweises auf die Patenterteilung: **05.09.2018**
(21) Anmeldenummer: 14726884.1
(22) Anmeldetag: 23.05.2014
(51) Int. Cl.: F16D 65/18, F16D 65/56

(54) **SCHEIBENBREMSE, INSBESONDERE FÜR NUTZFAHRZEUGE**
DISC BRAKE, IN PARTICULAR FOR COMMERCIAL VEHICLES
FREIN À DISQUE, EN PARTICULIER POUR VÉHICULES UTILITAIRES

(30) Priorität: 10.09.2013 DE 102013015002
(43) Veröffentlichungstag der Anmeldung: 20.07.2016
(73) Patentinhaber: WABCO Europe BVBA, 1160 Brussels (BE)
(72) Erfinder: JUNGMANN, Hans-Christian, 69517 Gorxheimertal (DE); STINGL, Gunther, 64367 Mühltal (DE)
(74) Vertreter: Lauerwald, Jörg
(86) Internationale Anmeldenummer: PCT/EP2014/001395
(87) Internationale Veröffentlichungsnummer: WO 2015/036064

(56) Entgegenhaltungen:
- EP-A1- 2 489 897
- DE-A1- 10 322 834
- DE-A1-102007 059 777
- US-A- 4 503 595

## Beschreibung

Die Erfindung betrifft eine Scheibenbremse, insbesondere für Nutzfahrzeuge, mit einer Bremsscheibe, einem Bremssattel, einer im Bremssattel angeordneten Zuspanneinrichtung, je mindestens einem Bremsbelag beiderseits der Bremsscheibe, einer Nachstelleinrichtung zum Ausgleich von Bremsbelag-/Bremsscheibenverschleiß, die zumindest teilweise innerhalb eines Innenraums des Bremssattels angeordnet ist und zu der ein Nachstellgetriebe mit einer ein Innengewinde aufweisenden Nachstellmutter und einer darin eingeschraubten und ein Außengewinde aufweisenden Nachstellspindel gehört, das derart ausgelegt ist, dass zum Nachstellen im Normalbetrieb der Bremse die Nachstellmutter bezüglich der drehfest gehaltenen Nachstellspindel verdreht wird, und einer ersten Dichteinrichtung zum zumindest teilweisen bremsscheibenseitigen Abdichten eines Ringraums, der einerseits von der Innenwand einer Durchgangsöffnung des Bremssattels und andererseits von der sich durch die Durchgangsöffnung und entgegen einem der Bremsbeläge erstreckenden und axial verstellbaren Nachstellspindel begrenzt ist, wobei die erste Dichteinrichtung einerseits an dem Sattel gehalten ist.

Bremsscheiben der oben genannten Art sind bekannt, beispielsweise aus der DE 10 2007 059 777 A1. In der Regel sind einschlägige Scheibenbremsen pneumatisch und/oder elektromechanisch betätigbar.

Die Nachstellmutter ist zum Nachstellen verdrehbar. Sie weist einen Druckbund auf, der sich in der Regel mit seiner zur Bremsscheibe weisenden Stirnfläche sowohl bei unbetätigter als auch bei betätigter Bremse in die Durchgangsöffnung des Bremssattels erstreckt. Die Durchgangsöffnung kann auch an einer den Bremssattel dichtend verschließenden Verschlussplatte oder einem Blechdeckel des Sattels ausgebildet sein, der im folgenden nur als "Deckel" bezeichnet ist.

Bei der oben genannten Durchgangsöffnung handelt es sich um eine Funktionsöffnung zur Durchführung wenigstens einer drehfesten, aber über die Nachstellmutter axial verschiebbaren Druck- oder Nachstellspindel, wobei die axiale Verschiebung bzw. Verstellung dem Ausgleich von Belag- und/oder Scheibenverschleiß dient. Die Nachstellspindel wirkt mit einem ihrer Endabschnitte gegen den zuspannseitigen Bremsbelag.

Der Durchgangsbereich im Deckel für die Nachstellspindel dient auch als Sitz für eine oder mehrere Dichtungen. Er wird durch einen umlaufenden und axial zum Bremseninneren verlaufenden rohrförmigen Kragen begrenzt, an den sich ein nach innen abgewinkelter radial ausgerichteter Flansch anschließt.

Die EP2489897 A1 offenbart eine Scheibenbremse mit einer Sekundärdichtung, welche topfartig und formsteif ausgebildet ist und zur Erzielung einer ausreichenden Dichtung zwischen der Stellspindel und der Sekundärdichtung eine elastische Dichtlippe aufweist. Die Dichtlippe ist umlaufend an der Sekundärdichtung an vulkanisiert und liegt dichtend an der Stellspindel an.

Bei der Bremse nach der DE 10 2007 059 777 A1 sind zur Abdichtung des Sattelinnenraums drei unterschiedlich angeordnete, ausgeformte und wirkende (Teil-)Dichtungen vorhanden.

Die erste Dichtung zur Abdichtung des erwähnten Ringraums ist von einer elastischen Schutzkappe in Form einer Faltenmanschette gebildet, die einerseits an dem Deckel und andererseits an einem der Bremsscheibe zugewandten Teil der Nachstellspindel angebracht ist.

Die zweite Dichtung zur Abdichtung des erwähnten Ringraums liegt an dem Außengewinde der Nachstellspindel an. Sie wird von einer auf dem drehbaren Druckbund der Nachstellmutter befestigten Metallhülse gehalten. Die Metallhülse erstreckt sich radial einwärts bis nahe dem Außengewinde der Nachstellspindel, um die flach ausgebildete Dichtung zu stützen und gegen Verwindung zu stabilisieren.

Die dritte Dichtung ist am Deckel befestigt und liegt an der Metallhülse dichtend an, wodurch sie den restlichen Ringraum abdichtet.

Die dritte Dichtung liegt somit im radial äußeren Teil des Ringraumes, die zweite Dichtung im radial inneren Teil.

Da zum Nachstellen die zweite Dichtung und der Metallring gedreht werden, wohingegen die Nachstellspindel und die dritte Dichtung drehfest gehalten sind, treten beim Nachstellen erhebliche Reibkräfte auf, nämlich zwischen der zweiten Dichtung und der Nachstellspindel einerseits und der dritten Dichtung und der Metallhülse andererseits. Da darüber hinaus die zweite Dichtung beim Nachstellen gedreht wird, wohingegen die dritte Dichtung beim Nachstellen steht, können die beiden Dichtungen nicht in einer einzigen Dichtung zusammengefasst werden.

Der Erfindung liegt die Aufgabe zugrunde, die Scheibenbremse der eingangs genannten Art derart weiterzubilden, dass zum einen eine leichtgängige Nachstellung sichergestellt ist und zum anderen ein einfacher Gesamtaufbau erzielt wird.

Erfindungsgemäß wird die gestellte Aufgabe dadurch gelöst, dass die erste Dichteinrichtung einerseits an dem Sattel gehalten ist und andererseits gleitend an der Nachstellspindel anliegt.

Dadurch, dass erfindungsgemäß die erste Dichteinrichtung sowohl an dem Sattel als auch an der drehfest gehaltenen Nachstellspindel gehalten ist bzw. gleitend anliegt, weist sie keine Teile auf, die beim Nachstellen bezüglich des Sattels oder der Nachstellspindel verdreht werden. Vielmehr wird sie ausschließlich axial bezüglich der Nachstellspindel verschoben, weshalb Reibung nur dort auftritt, wo ein Außengewindegang der Nachstellspindel die radial innen liegende Fläche der ersten Dichteinrichtung kreuzt. Die insgesamt auftretende Reibkraft ist daher geringer als beim Stand der Technik. Darüber hinaus ist es nicht erforderlich, die erste Dichteinrichtung in einen drehenden und einen stehenden Teil aufzuteilen, wodurch die Gesamtanordnung einfacher wird.

Erfindungsgemäß bevorzugt ist eine Einrichtung zur radialen Vorspannung der ersten Dichteinrichtung gegen die Nachstellspindel und/oder zur axialen Vorspannung der ersten Dichteinrichtung gegen die Nachstellmutter vorgesehen.

Die axiale Vorspannung dient dabei zur Sicherung der Dichtungswirkung. Die axiale Vorspannung kann dazu genutzt werden, die erste Dichteinrichtung gegen die Stirnfläche eines Druckbundes der Nachstellmutter zu drängen. Dadurch werden Schrägstellungen dieses Dichtungsbereichs und ein daraus resultierendes Austreten aus dem Gewindebereich vermieden. Derartiges kann insbesondere dann auftreten, wenn bei einem Bremsbelagwechsel die Druckspindel manuell zurück-/zugestellt wird.

Erfindungsgemäß weiter bevorzugt ist vorgesehen, dass die erste Dichteinrichtung eine radiale Vorspannung gegen die Nachstellspindel und/oder eine axiale Vorspannung gegen die Nachstellmutter erzeugende Ausbuchtung aufweist.

Grundsätzlich kann dadurch die erste Dichteinrichtung weitestgehend konstante Dicke haben. Sie ist als aus einem Elastomer hergestelltes membranartiges Bauteil einfacher als beispielsweise eine Faltenmanschette mit differenzierten Materialquerschnitten, insbesondere Verdickungen von Dichtwulsten etc. Denn durch die Ausbuchtung kann auch bei weitestgehend konstanter Dicke die erwähnte radiale bzw. axiale Vorspannung erzeugt werden.

Die Ausbuchtung ist erfindungsgemäß bevorzugt im Querschnitt trogförmig. Insbesondere hat sie einen trapezförmigen Querschnitt.

Die Ausbuchtung liegt erfindungsgemäß bevorzugt im radial äußeren Bereich der ersten Dichteinrichtung, d.h. benachbart dem Lagerungsbereich im Bremssattel bzw. in dessen Deckel oder Verschlussplatte. Dadurch können die für die radiale/axiale Vorspannung erforderlichen Stützkräfte aufgebaut werden. Im übrigen dient der Lagerbereich auch der Versteifung der ersten Dichteinrichtung.

Gegenüber beispielsweise Faltenmanschetten mit einem Dichtungswulst ist diese erfindungsgemäß bevorzugte Lösung eine räumlich flachbauende und den engen axialen Einbauverhältnissen Rechnung tragende Dichtungsvariante.

Nach einer weiter bevorzugten Ausführungsform der Erfindung liegt die Ausbuchtung auf der der Bremsscheibe zugewandten Seite der ersten Dichteinrichtung.

Erfindungsgemäß weiter bevorzugt ist vorgesehen, dass die erste Dichteinrichtung auf der der Bremsscheibe abgewandten Seite einen Vorsprung zur Anlage an einer bremsscheibenzugewandten Stirnseite der Nachstellmutter aufweist. Dies dient zur weiteren Reduzierung der Reibfläche angesichts der Tatsache, dass die Dichtung beim Nachstellen steht, wohingegen die Nachstellmutter verdreht wird.

Zur weiteren Reduzierung der Reibfläche ist es erfindungsgemäß weiter bevorzugt, dass der Vorsprung V-förmigen Querschnitt hat. Weiter bevorzugt ist er ringförmig durchgehend ausgebildet.

Der Vorsprung zur Reduzierung der Reibfläche bzw. des Kontaktbereichs bewirkt nicht nur eine Verringerung der auftretenden Reibkräfte, sondern sichert auch einen gewissen Abstand der Bauteile voneinander, wodurch die Gefahr von Dichtungsverwindungen oder Verquetschungen im Gewindebereich minimiert ist, wenn die Nachstellmutter beim Nachstellen oder bei einer Belagerneuerung auf der Nachstellspindel bezüglich der ersten Dichteinrichtung verdreht wird.

Erfindungsgemäß weiter bevorzugt weist die erste Dichteinrichtung einen Wulst zur axialen Lagesicherung an dem Bremssattel auf. Dadurch ist sichergestellt, dass die erste Dichteinrichtung bei axialer Verschiebung der Nachstellspindel nicht von der Nachstellspindel axial mitgerissen wird.

Zur weiteren Abdichtung des genannten Ringraums dient nach einer weiter bevorzugten Ausführungsform der Erfindung eine zweite Dichteinrichtung, die einerseits an dem Bremssattel und andererseits an der Nachstellspindel angebracht ist. Unter "angebracht" wird in diesem Zusammenhang eine Befestigung verstanden, die die zweite Dichteinrichtung insbesondere in Axialrichtung an der Nachstellspindel festlegt.

Bevorzugt ist die zweite Dichteinrichtung eine Faltenmanschette.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische perspektivische Schnittansicht eines Ausführungsbeispiels der Scheibenbremse nach der Erfindung,
- Figur 2: eine teilweise geschnittene schematische Teilansicht der Scheibenbremse nach Figur 1 in der Anfangsstellung der Nachstellspindel,
- Figur 3: die gleiche Ansicht wie Figur 2, jedoch mit teilweise ausgeschraubter Nach-stellspindel,

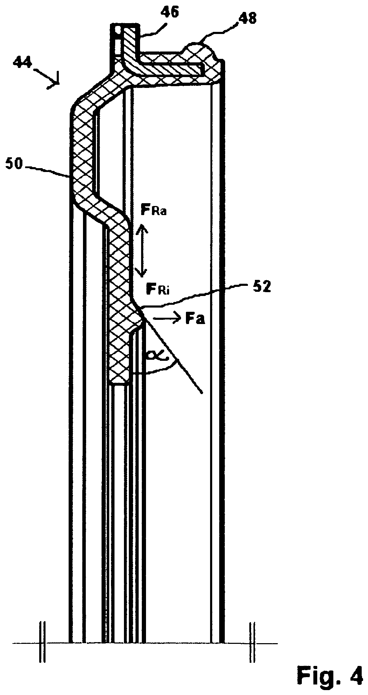

- Figur 4: eine Halbschnittansicht der ersten Dichteinrichtung der Scheibenbremse nach Figur 1 und
- Figur 5: eine vergrößerte schematische Schnittansicht der Scheibenbremse nach Figur 1.

Bei der in der Zeichnung dargestellten Bremse handelt es sich um eine Nutzfahrzeugscheibenbremse mit einem eine (nicht in der Zeichnung dargestellte) Bremsscheibe umfassenden Bremssattel 10, an dem sich eine mittels eines schwenkbaren Drehhebels 12 zu betätigende und quer zu einer Drehachse der Bremsscheibe liegende Zuspannwelle (nicht gezeigt) abstützt. Die Zuspannwelle wirkt auf ein drehfest im Bremssattel 10 gelagertes und sich quer zur Bremsscheibe erstreckendes Druckstück 14 ein. Das Druckstück 14 weist eine Durchgangsöffnung 16 auf, in der eine zu einer Nachstelleinrichtung gehörende drehbare Nachstellmutter 18 mit einem zur Bremsscheibe weisenden Druckbund 20 und einer Drehachse A aufgenommen ist. In die Nachstellmutter 18 ist eine nicht um die Drehachse A drehbare Nachstellspindel 22 mit einem Außengewinde 24 eingeschraubt. Dazu ist die Nachstellmutter 18 mit einem Innengewinde 26 ausgestattet. Die Nachstellmutter 18 wird auch als Druckhülse bezeichnet. Ein anderer Name für die Nachstellspindel 22 ist Druckspindel.

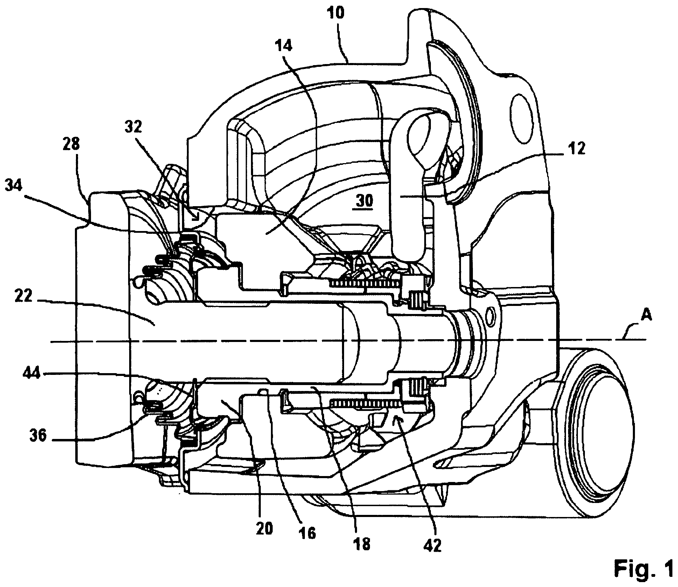

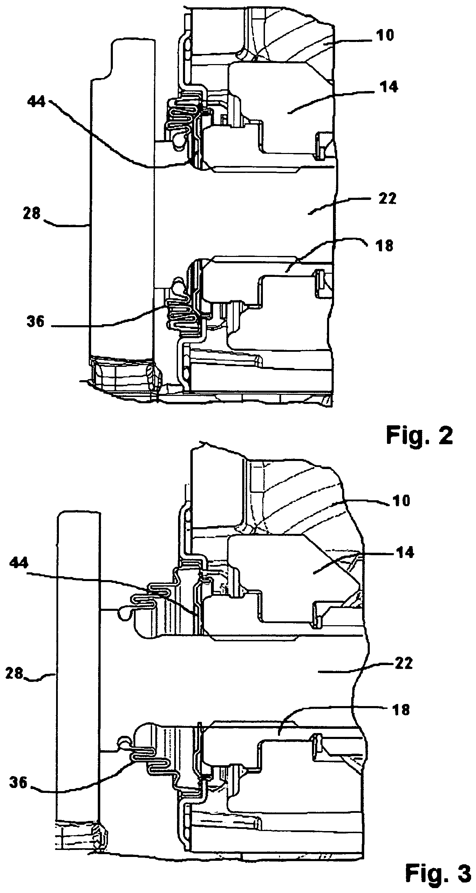

Die Nachstellspindel 22 drückt bei Betätigung der Bremse gegen einen zuspannseitigen Bremsbelag 28. Der felgenseitige Bremsbelag ist nicht gezeigt. Der Zuspannhebel 12, die Zuspannwelle, das Druckstück 14, die Nachstellmutter 18 und die Nachstellspindel 22 sind zumindest teilweise in einem Innenraum 30 des Bremssattels 10 aufgenommen. Dabei weist der Bremssattel 10 zur Bremsscheibe hin weisend eine als Durchgangsöffnung ausgestaltete Funktionsöffnung 32 auf, in die sich der Druckbund 20 der Nachstellmutter 18 und die Nachstellspindel 22 hinein- bzw. hindurcherstrecken. Dabei liegt zwischen der Innenwand 34 der Durchgangsöffnung 32 des Sattels 10 und dem Druckbund 20 bzw. der Nachstellspindel 22 ein Ringraum. Zur Abdichtung dieses Ringraums dient eine elastische Schutzkappe in Form einer Faltenmanschette 36. Sie ist einerseits an dem Bremssattel 10 oder - wie in den Figuren 1 bis 3 gezeigt - an einem rohrförmigen Kragen 38 an einem am Bremssattel 10 befestigten Deckel 40 und andererseits an einem der Bremsscheibe zugewandten Teil der Nachstellspindel 22 angebracht. Das Druckstück 14 stützt sich an der Zuspannseite des Druckbundes 20 ab. Auf der Nachstellmutter 18 sitzt endseitig eine automatische Nachstellvorrichtung 42, die ihrerseits zur Aktivierung derart mit dem Drehhebel 12 gekoppelt ist, dass der Drehhebel 12 die Nachstellvorrichtung 42 im Bedarfsfalle und zur Lüftspieleinstellung in Drehung versetzt.

Der sich in die Funktionsöffnung 32 erstreckende Bereich des Druckbundes 20 der Nachstellmutter 18 dient mit seiner Stirnfläche als Kontakt-/Anlagebereich der davorliegenden membranartigen und den Sattelinnenraum 30 abdichtenden Sekundär-/Redundantdichtung, die eine bevorzugte Ausführungsform der in den Ansprüchen erwähnten ersten Dichteinrichtung darstellt. Diese Dichtung ist mit der Bezugszahl 44 bezeichnet.

Die Dichtung 44 ist aus einem elastischen Werkstoff (Elastomer). Sie ist derart ausgelegt, dass sie in eingebautem Zustand die Funktionsöffnung 32 ganzflächig und zu beiden Seiten ringförmig abdichtet. Dazu ist auf der dem Bremsbelag 28 zugewandten Seite ein in das Dichtungsmaterial eingelagerter Stützring 46 vorgesehen, der in dem dargestellten Ausführungsbeispiel im Querschnitt L-förmig und aus Metall ist. Er hat Schutz- und Stabilisierungsfunktion. Darüber hinaus ermöglicht er auch Vereinfachungen beim Einbau, insbesondere ermöglicht er einen automatisierten Einbau. Auf der dem Innenraum 30 zugewandten Seite ist ein Ringwulst 48 an der Dichtung 44 ausgebildet, der radial nach außen über die Funktionsöffnung 32 übersteht. Damit ist die Dichtung 44 verlässlich und ortsfest an einem sich radial einwärts erstreckenden Flansch 49 des Deckels 40 gehalten.

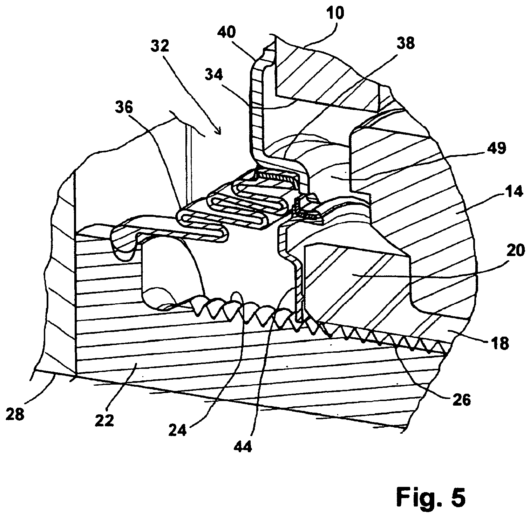

Wie insbesondere Figur 5 zu entnehmen ist, erstreckt sich die Dichtung 44 elastisch unmittelbar vor der Stirnfläche des Druckbundes 20 bis in den Bereich des Außengewindes 24 der Nachstellspindel 22 hinein. Dabei ist der Innendurchmesser der Dichtung 44 geringfügig kleiner als der Außendurchmesser des Außengewindes 24. Die Wandstärke der Dichtung 44 ist weitestgehend konstant. Benachbart ihrem radial äußeren Befestigungsbereich mit dem Stützring 46 erstreckt sich nach radial einwärts eine im Querschnitt trogförmige Ausbuchtung 50. Man kann auch von einer Ausstülpung oder Ausformung sprechen. Sie kann trapezförmig sein. Ihr Boden zeigt in Richtung der Bremsscheibe. Da die Ausbuchtung 50 in unmittelbarer Nähe des ortsfesten und Stützkräfte aufbauenden Lagerbereichs mit dem Stützring 46 liegt, dient sie nicht nur zur Versteifung gegen Verwindungen bei Relativbewegungen bezüglich des Außengewindes, sondern ermöglicht es auch, radial ein- oder auswärts wirkende elastische Schub-/Rückstellkräfte F_{Ra}/ F_{Ri} aufzubauen bzw. aufzunehmen. Die Seitenwände verlaufen unter einem Winkel α bezüglich der Radialebene, der in dem dargestellten Ausführungsbeispiel bei etwa 45° liegt. Dies ermöglicht unter anderem auch eine flach verlaufende und somit wenig axialen Einbauraum in Anspruch nehmende Ausgestaltung der Dichtung 44, die ohne weitere zusätzliche Stützteile auskommt und dennoch wirkungsvoll das Außengewinde 24 der Nachstellspindel 22 abdichtet.

Diese Abdichtung erfolgt dadurch, dass sich beim ersten Kontakt mit dem Außengewinde 24 die Dichtung 44 an den Gewindeflanken anlegt. Dadurch wird eine optimale Gewindeabdichtung auch in radialer Lage erzeugt, was insbesondere bei mehrgängigen Gewinden sehr wirkungsvoll ist.

Der einfache Aufbau der Dichtung 44 ist insbesondere im Hinblick auf automatisierte Montagen und bei Servicearbeiten von Vorteil, bei denen die Dichtung 44 auszutauschen ist. Es brauchen keine Halteteile entfernt zu werden, weil ein freier Zugang gegeben ist.

Die Ausbuchtung 50 dient ferner dazu, eine axiale Vorspannkraft Fₐ entgegen der Stirnfläche des Druckbundes 20 aufzubauen, so dass eine enge/flache Dichtungsanlage erzielt wird. Um hier großflächige haftende Anlagen zu vermeiden, die dann bei einer Drehung der Nachstellmutter 18 zu einem möglichen Kontaktverlust im Gewindebereich führen können, weist die Dichtung 44 einen ringförmigen Vorsprung 52 auf, durch den die Kontaktfläche reduziert ist. Dies gilt insbesondere im Hinblick darauf, dass der Vorsprung 52 im Querschnitt V-förmig ist.

Die in der Zeichnung dargestellte Bremse wird durch Schwenkbewegungen des Drehhebels 12 betätigt, wenn über eine beispielsweise an dem in Figur 1 auf der rechten Seite liegenden Ende des Bremssattels 10 angeflanschte Betätigungseinrichtung, wie etwa ein Bremszylinder, ein Bremsvorgang eingeleitet wird. Unter Einbeziehung des Druckstücks 14, in dem wenigstens eine Nachstellmutter/Nachstellspindel-Anordnung gelagert ist, erfolgt eine Verschiebung in Richtung des Bremsbelages 28. Bei Bremsentlastung schiebt ein (nicht dargestelltes) (Druck-)Federsystem die ganze Zuspannvorrichtung wieder in die Ausgangslage. Bei reinen Axialbewegungen folgt somit die Dichtung 44 unter Anlage an dem Außengewinde 24 diesen Bewegungen, wobei Relativbewegungen bezüglich der Nachstellspindel 22 durch die trogförmige Ausbuchtung ermöglicht bzw. ausgeglichen werden. Treten dabei Nachstellbewegungen auf, erfolgt eine Drehung der Nachstellmutter 18, und die Nachstellspindel 22 wird aus der Nachstellmutter 18 herausgeschraubt. Da die Dichtung 44 aber ortsfest am Deckelflansch 34 und damit indirekt an dem Bremssattel 10 gehalten ist, bleibt sie in ihrer axialen Lage unverändert, wenngleich die Nachstellspindel 22 aus der Nachstellmutter 18 herausgeschraubt wird. Sie gleitet über die radiale Außenfläche des Gewindes 24.

Selbst wenn die Faltenmanschette 36 beschädigt sein sollte, werden durch die Dichtung 44 der Innenraum 30 des Bremssattels 10 und insbesondere der Spindeltrieb 18/22 wirkungsvoll geschützt. Bei einem anschließenden Service kann die Faltenmanschette 36 in herkömmlicher Weise ausgetauscht werden. Dies gilt auch bei Bedarf für die Dichtung 44, denn sie muss lediglich axial von dem Flansch 49 herausgezogen werden, um dann von der Nachstellspindel 22 entfernt zu werden.

In dem in der Zeichnung dargestellten Ausführungsbeispiel ist der Deckel 40 an den Bremssattel 10 angeschraubt, wenngleich dies in der Zeichnung nicht im einzelnen dargestellt ist.

Bei der in der Zeichnung dargestellten Scheibenbremse handelt es sich um eine Einspindelbremse mit einem Druckstück. Die Erfindung ist aber auch auf Zwei- oder Mehrspindelbremsen mit oder ohne Druckstück anwendbar.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einer Bremsscheibe,
einem Bremssattel (10),
einer im Bremssattel angeordneten Zuspanneinrichtung (12),
je mindestens einem Bremsbelag (28) beiderseits der Bremsscheibe,
einer Nachstelleinrichtung zum Ausgleich von Bremsbelag-/Bremsscheibenverschleiß, die zumindest teilweise innerhalb eines Innenraums des Bremssattels angeordnet ist und zu der ein Nachstellgetriebe mit einer ein Innengewinde (26) aufweisenden Nachstellmutter (18) und einer darin eingeschraubten und ein Außengewinde (24) aufweisenden Nachstellspindel (22) gehört, das derart ausgelegt ist, dass zum Nachstellen im Normalbetrieb der Bremse die Nachstellmutter (18) bezüglich der drehfest gehaltenen Nachstellspindel (22) verdreht wird, und
einer ersten Dichteinrichtung (44) zum zumindest teilweisen bremsscheibenseitigen Abdichten eines Ringraums, der einerseits von der Innenwand (34) einer Durchgangsöffnung (32) des Bremssattels (10) und andererseits von der sich durch die Durchgangsöffnung und entgegen einem der Bremsbeläge (28) erstreckenden und axial verstellbaren Nachstellspindel (22) begrenzt ist, wobei
die erste Dichteinrichtung (44) einerseits an dem Sattel (10) gehalten ist, **dadurch gekennzeichnet, dass**
die erste Dichteinrichtung (44) andererseits gleitend an der Nachstellspindel (22) anliegt.

2. Scheibenbremse nach Anspruch 1, **gekennzeichnet durch** eine Einrichtung (50) zur radialen Vorspannung der ersten Dichteinrichtung (44) gegen die Nachstellspindel (22) und/oder zur axialen Vorspannung der ersten Dichteinrichtung (44) gegen die Nachstellmutter (18).

3. Scheibenbremse nach Anspruch 1 oder 2, **dadurch gekennzeichnet, dass** die erste Dichteinrichtung (44) eine eine radiale Vorspannung gegen die Nachstellspindel (22) und/oder eine axiale Vorspannung gegen die Nachstellmutter (18) erzeugende Ausbuchtung (50) aufweist.

4. Scheibenbremse nach Anspruch 3, **dadurch gekennzeichnet, dass** die Ausbuchtung (50) im Querschnitt trogförmig ist.

5. Scheibenbremse nach Anspruch 3 oder 4, **dadurch gekennzeichnet, dass** die Ausbuchtung (50) im radial außen liegenden Bereich der ersten Dichteinrichtung (44) liegt.

6. Scheibenbremse nach einem der Ansprüche 3 bis 5, **dadurch gekennzeichnet, dass** die Ausbuchtung (50) auf der der Bremsscheibe zugewandten Seite der ersten Dichteinrichtung (44) liegt.

7. Scheibenbremse nach einem der vorangehenden Ansprüche, **dadurch gekennzeichnet, dass** die erste Dichteinrichtung (44) auf der der Bremsscheibe abgewandten Seite einen Vorsprung (52) zur Anlage an einer bremsscheibenzugewandten Stirnseite der Nachstellmutter (18) aufweist.

8. Scheibenbremse nach Anspruch 7, **dadurch gekennzeichnet, dass** der Vorsprung (52) V-förmigen Querschnitt hat.

9. Scheibenbremse nach einem der vorangehenden Ansprüche, **dadurch gekennzeichnet, dass** die erste Dichteinrichtung (44) einen Wulst (48) zur axialen Lagesicherung an dem Bremssattel (10) aufweist.

10. Scheibenbremse nach einem der vorangehenden Ansprüche, **gekennzeichnet durch** eine zweite Dichteinrichtung (36) zum Abdichten des Ringraums, die einerseits an dem Bremssattel (10) und andererseits an der Nachstellspindel (22) angebracht ist.

11. Scheibenbremse nach Anspruch 10, **dadurch gekennzeichnet, dass** die zweite Dichteinrichtung (36) eine Faltenmanschette ist.

## Claims

1. Disc brake, in particular for commercial vehicles, having:
a brake disc,
a brake caliper (10),
an application device (12) arranged in the brake caliper,
at least one brake lining (28) on each side of the brake disc,
an adjustment device for compensating for brake lining/brake disc wear, which is arranged at least partially inside an interior space of the brake caliper and to which an adjustment gear belongs, said adjustment gear having an adjustment nut (18), which has an internal thread (26), and an adjustment spindle (22), which is screwed therein and has an external thread (24), and being designed in such a way that, for adjustment during normal operation of the brake, the adjustment nut (18) is rotated in relation to the adjustment spindle (22), which is fixed against rotation, and
a first sealing device (44) for at least partially sealing off an annular space on the brake disc side, said annular space being delimited on one side by the inner wall (34) of a through-opening (32) in the brake caliper (10) and on the other side by the axially adjustable adjustment spindle (22), which extends through the through-opening and toward one of the brake linings (28), wherein
the first sealing device (44) is held on the caliper (10) at one end,
**characterized in that**
the first sealing device (44) bears in a sliding manner against the adjustment spindle (22) at the other end.

2. Disc brake according to Claim 1, **characterized by** a device (50) for radially preloading the first sealing device (44) against the adjustment spindle (22) and/or for axially preloading the first sealing device (44) against the adjustment nut (18).

3. Disc brake according to Claim 1 or 2, **characterized in that** the first sealing device (44) has a bulge (50) which produces a radial preload against the adjustment spindle (22) and/or an axial preload against the adjustment nut (18).

4. Disc brake according to Claim 3, **characterized in that** the bulge (50) is trough-shaped in cross section.

5. Disc brake according to Claim 3 or 4, **characterized in that** the bulge (50) is situated in the radially outer region of the first sealing device (44).

6. Disc brake according to one of Claims 3 to 5, **characterized in that** the bulge (50) is situated on the side of the first sealing device (44) which faces the brake disc.

7. Disc brake according to one of the preceding claims, **characterized in that** the first sealing device (44) has a projection (52) on the side facing away from the brake disc for the purpose of resting on an end of the adjustment nut (18) which faces the brake disc.

8. Disc brake according to Claim 7, **characterized in that** the projection (52) has a V-shaped cross section.

9. Disc brake according to one of the preceding claims, **characterized in that** the first sealing device (44) has a bead (48) for axial position retention on the brake caliper (10).

10. Disc brake according to one of the preceding claims, **characterized by** a second sealing device (36) for sealing the annular space, said sealing device being attached to the brake caliper (10) at one end and to the adjustment spindle (22) at the other end.

11. Disc brake according to Claim 10, **characterized in that** the second sealing device (36) is a folding boot.

## Revendications

1. Frein à disque, en particulier pour véhicules utilitaires, comprenant
un disque de frein,
un étrier de frein (10),
un dispositif de serrage (12) disposé dans l'étrier de frein,
à chaque fois au moins une garniture de frein (28) des deux côtés du disque de frein,
un dispositif de réglage pour compenser l'usure entre la garniture de frein et le disque de frein, qui est disposé au moins en partie à l'intérieur d'un espace interne de l'étrier de frein et auquel appartient un mécanisme de réglage avec un écrou de réglage (18) présentant un filetage interne (26) et une broche de réglage (22) vissée dans celui-ci, présentant un filetage externe (24), qui est configurée de telle sorte que, pour le réglage pendant le fonctionnement normal du frein, l'écrou de réglage (18) soit tourné par rapport à la broche de réglage (22) retenue bloquée en rotation, et
un premier dispositif d'étanchéité (44) pour réaliser l'étanchéité au moins en partie d'un espace annulaire du côté du disque de frein, qui d'une part est limité par la paroi interne (34) d'une ouverture de passage (32) de l'étrier de frein (10) et d'autre part par la broche de réglage (22) déplaçable axialement et s'étendant à travers l'ouverture de passage et contre l'une des garnitures de frein (28),
le premier dispositif d'étanchéité (44) étant retenu d'une part contre l'étrier (10),
**caractérisé en ce que**
le premier dispositif d'étanchéité (44) s'applique d'autre part de manière coulissante contre la broche de réglage (22).

2. Frein à disque selon la revendication 1, **caractérisé par** un dispositif (50) pour la précontrainte radiale du premier dispositif d'étanchéité (44) contre la broche de réglage (22) et/ou pour la précontrainte axiale du premier dispositif d'étanchéité (44) contre l'écrou de réglage (18).

3. Frein à disque selon la revendication 1 ou 2, **caractérisé en ce que** le premier dispositif d'étanchéité (44) présente un renflement (50) produisant une précontrainte radiale contre la broche de réglage (22) et/ou une précontrainte axiale contre l'écrou de réglage (18).

4. Frein à disque selon la revendication 3, **caractérisé en ce que** le renflement (50) présente une forme de cuvette en section transversale.

5. Frein à disque selon la revendication 3 ou 4, **caractérisé en ce que** le renflement (50) est situé dans la région située radialement à l'extérieur du premier dispositif d'étanchéité (44).

6. Frein à disque selon l'une quelconque des revendications 3 à 5, **caractérisé en ce que** le renflement (50) est situé du côté, tourné vers le disque de frein, du premier dispositif d'étanchéité (44).

7. Frein à disque selon l'une quelconque des revendications précédentes, **caractérisé en ce que** le premier dispositif d'étanchéité (44) présente, du côté opposé au disque de frein, une saillie (52) pour l'application contre un côté frontal, tourné vers le disque de frein, de l'écrou de réglage (18).

8. Frein à disque selon la revendication 7, **caractérisé en ce que** la saillie (52) présente une section transversale en forme de V.

9. Frein à disque selon l'une quelconque des revendications précédentes, **caractérisé en ce que** le premier dispositif d'étanchéité (44) présente un bourrelet (48) pour la fixation axiale en position contre l'étrier de frein (10).

10. Frein à disque selon l'une quelconque des revendications précédentes, **caractérisé par** un deuxième dispositif d'étanchéité (36) pour l'étanchéité de l'espace annulaire, qui est monté d'une part contre l'étrier de frein (10) et d'autre part contre la broche de réglage (22).

11. Frein à disque selon la revendication 10, **caractérisé en ce que** le deuxième dispositif d'étanchéité (36) est un manchon à soufflet.
